# EUROPEAN PATENT SPECIFICATION

(11) **EP 3 360 358 B1**
(45) Date of publication and mention of the grant of the patent: **22.07.2020**
(21) Application number: 15817196.7
(22) Date of filing: 16.12.2015
(51) Int. Cl.: H04W 12/04, H04W 12/00, H04L 29/08, H04L 29/06, H04W 4/50, H04W 4/60, H04W 12/02

(54) **IDENTITY PROFILE PROVISIONING TECHNIQUE**
VERFAHREN ZUR BEREITSTELLUNG VON IDENTITÄTSPROFILEN
TECHNIQUE DE FOURNITURE DE PROFIL D'IDENTITÉ

(43) Date of publication of application: 15.08.2018
(73) Proprietor: Huawei Technologies Co., Ltd., Longgang District Shenzhen, Guangdong 518129 (CN)
(72) Inventor: LI, Jian, 80992 Munich (DE); WU, Gengshi, 80992 Munich (DE); BARRETO, Luis, 80992 Munich (DE); LOWE, Christopher, 80992 Munich (DE)
(74) Representative: Gill Jennings & Every LLP
(86) International application number: PCT/EP2015/079937
(87) International publication number: WO 2017/101991

(56) References cited:
- WO-A1-2014/000157
- US-A1- 2013 012 168
- US-A1- 2013 157 673

## Description

### BACKGROUND

The present invention, in some embodiments thereof, relates to provisioning a device on a network and, more specifically, but not exclusively, relates to an identity profile for a device provisioned on a network.

Current mobile phones use a subscriber identity module (SIM) card provided by the mobile network operator (MNO) to the subscriber (e.g. bill payer) for identification and security purposes. An identity profile for the device is stored on a SIM card which is inserted into the mobile phone. The identity profile is used by the device when it communicates over the network. The identity profile may be used by the MNO to monitor device usage for billing and other purposes.

An additional type of network usage which is now emerging are networks such as Internet of Things (IoT). An IoT-type network connects objects embedded with electronics, software, sensors and the like, enabling these objects to collect and exchange data. The radio and modem modules for devices for an IoT-type network typically use similar security to existing 3GPP mobile phones. The modules for IoT-type devices are manufactured without being bound to any particular network. Subsequently, these devices need to be bound to a network and secured. This means the identity profile data needs to be provided to the module in a secure manner. Additionally, the device needs to be provisioned on the network so that the device is recognized and the secure keys agree.

3GPP architecture includes an embedded SIM remote provisioning architecture which can provision devices which are not bound to a network. However this remote provisioning architecture is quite complex. It requires a special provisioning network for the device to connect to, which means that the device cannot easily be bound to a network in the field.

US 2013/0012168 A1 describes a method and system for secured remote provisioning of a universal circuit card of a user equipment.

### SUMMARY

It is an object of the present invention to improve secure identification for a mobile user using a mobile terminal.

This object is solved by the independent claims. The dependent claims provide further modifications.

In some embodiments, in order to provide an identity profile to a device, a provisioning key and a provisioning device identifier are stored on the device. The device uses non-provisioned communication to initiate messaging with a profile provisioner in order to obtain an identification profile. A provisioning server maintains an index of provisioning keys and respective provisioning device identifiers. In response to a request from a device for an identification profile, the profile provisioner sends the device's provisioning device identifier to the provisioning server. The provisioning server identifies the respective provisioning key and generates a security key from the provisioning key. The security key is used to create a secure connection between the device and an identity profile issuer. The identity profile is then sent by the profile issuer to the device over the secure connection, enabling the device to perform provisioned communication over the network.

As used herein the term "non-provisioned communication" means communications over a network which do not include identity profile data. At the device the non-provisioned communication may be limited to specific types of messages, for example emergency dial in a mobile telephone. A network element, such as profile provisioner 120, has non-provisioned communication capabilities when it is capable of receiving messages sent by devices without accompanying identity profile information and sending messages to the device which originated the non-provisioned communication.

As used herein the term "provisioned communication" means communications over a network which are identified and/or authenticated and/or secured by identity profile data. A device has provisioned communication capabilities only once it has an identity profile.

As used herein the term "identity profile" means one or more data items which are used to identify and/or authenticate and/or secure the device during provisioned communication over the network. Optionally, some or all of the identity profile data items are included in messages sent by the device and/or in messages sent to the device.

In mobile telephony networks a user typically establishes a relationship with a mobile network operator before the device may be provided with an identity profile. It is noted that embodiments of the invention are not limited to include a preliminary step of forming a relationship between a user (and/or device) and a network operator.

According to an aspect of some embodiments of the present invention there is provided an apparatus for providing an identity profile to a device. The device is provisionable for communicating over a network using the identity profile. The apparatus includes:
an interface adapted for provisioned and non-provisioned communications with devices connected to the network, the devices having respective provisioning keys and provisioning device identifiers; and
at least one processor adapted to execute code instructions for:
   i) receiving, from a device by non-provisioned communications, a request for an identity profile. The request includes a respective provisioning device identifier of the device;
   ii) obtaining, from a provisioning server, a security key for establishing a secure connection with the device. The security key is based on a provisioning key indexed to the respective provisioning device identifier; and
   iii) instructing a profile issuer to send the identity profile to the device over a secure connection established using the security key.

According to some embodiments of the invention, the apparatus is further adapted to provide the security key to the profile issuer.

According to some embodiments of the invention, the apparatus is further adapted to forward authentication and authorization messages between the profile issuer and the device.

According to some embodiments of the invention, the apparatus is further adapted to identify a network operator provisioning the device and to inform the network operator of the request for an identity profile.

According to some embodiments of the invention, wherein the secure connection is established using at least one of A3 and A8 cryptography functions.

According to some embodiments of the invention, the security key is generated from a RAND for A3/A8 cryptography.

According to some embodiments of the invention, the apparatus is further adapted to identify the provisioning server from the respective provisioning device identifier.

According to an aspect of some embodiments of the present invention there is provided a device for communicating over a network. The device includes:
an interface adapted for provisioned and non-provisioned communications over the network;
at least one non-volatile memory storing: a provisioning key assigned to the device, provisioning device identifier assigned to the device and an identity profile for use during provisioned communication over the network; and
at least one processor adapted to execute code instructions for:
   i) sending a request for an identity profile over a communication connection established by non-provisioned communication, wherein the request includes the provisioning device identifier;
   ii) receiving the identity profile over a secure connection established using the provisioning key; and
   iii) storing the identity profile in the memory.

According to some embodiments of the invention, the provisioned communications use an identity profile retrieved from the at least one non-volatile memory.

According to some embodiments of the invention, the non-volatile memory is non-removable from the device.

According to some embodiments of the invention, the device is further adapted to establish a secure connection with a network element.

According to some embodiments of the invention, the secure connection is established by generating a security key from the provisioning key and performing authentication and/or authorization with a profile issuer using the security key.

According to some embodiments of the invention, the secure connection is established using at least one of A3 and A8 cryptography functions.

According to an aspect of some embodiments of the present invention there is provided a method of providing an identity profile to a device. The device is provisionable for communicating over a network using the identity profile. The method includes:
i) receiving, from a device by non-provisioned communications, a request for an identity profile. The request includes a respective provisioning device identifier of the device;
ii) obtaining, from a provisioning server, a security key for establishing a secure connection with the device. The security key is based on a provisioning key indexed to the respective provisioning device identifier; and
iii) instructing a profile issuer to send the identity profile to the device over a secure connection established using the security key.

According to some embodiments of the invention, the provisioning key is a cryptographic key pre-shared between the device and the provisioning server.

According to some embodiments of the invention, the method further includes identifying the provisioning server from the respective provisioning device identifier.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
Figs. 1A-1E are simplified diagrams of networks with identity profile provisioning, according to respective embodiments of the invention;
FIG. 2 is a simplified signaling chart of messages passing between network elements, according to embodiments of the invention;
FIG. 3 is a simplified signaling chart of messages passing between network elements, according to embodiments of the invention;
FIGS. 4A-4B are simplified block diagrams of a profile provisioner, according to respective embodiments of the invention;
FIG. 5 is a simplified flowchart of providing an identity profile to a device, according to embodiments of the invention;
FIG. 6 is a simplified block diagram of a device for communicating over a network, according to embodiments of the invention;
FIG. 7 is a simplified flowchart of obtaining an identity profile at a device, according to embodiments of the invention;
FIG. 8 is a simplified signaling chart of messaging during manufacture and prior to switch on of the device, according to exemplary embodiments of the invention;
FIGS. 9-11B are simplified signaling charts of messaging during multiple phases of identity profile provisioning to the device, according to exemplary embodiments of the invention; and
FIG. 12 is a simplified flowchart of providing a device with an identity profile, according to exemplary embodiments of the invention.

### DETAILED DESCRIPTION

The present invention, in some embodiments thereof, relates to provisioning a device on a network and, more specifically, but not exclusively, relates to an identity profile for a device provisioned on a network.

According to aspects of the invention, prior to providing an identity profile to a device over a network, a provisioning key (also denoted herein K_{IPROV}) and a provisioning device identifier (e.g. an IMEI) are stored on the device. The provisioning key serves as a pre-shared key which is used for cryptographic and/or security purposes, as described in more detail below. A provisioning server maintains an index of provisioning keys and respective provisioning device identifiers, so that given a provisioning device identifier for a specific device the provisioning server may provide the respective provisioning key for the device. In order to obtain an identity profile, a device sends a request for an identity profile to a profile provisioner by non-provisioned communication. The profile provisioner obtains the security key, which is used to establish a secure connection between the device and a profile issuer which issues the identity profile to the device. The identity profile is sent by the profile issuer to the device over the secure connection. The device may then use the identity profile for provisioned communication over the network.

As used herein the term "K_{IPROV}" means a secured, pre-shared secret key known to the device and to one or more of the identity profile provisioning entities.

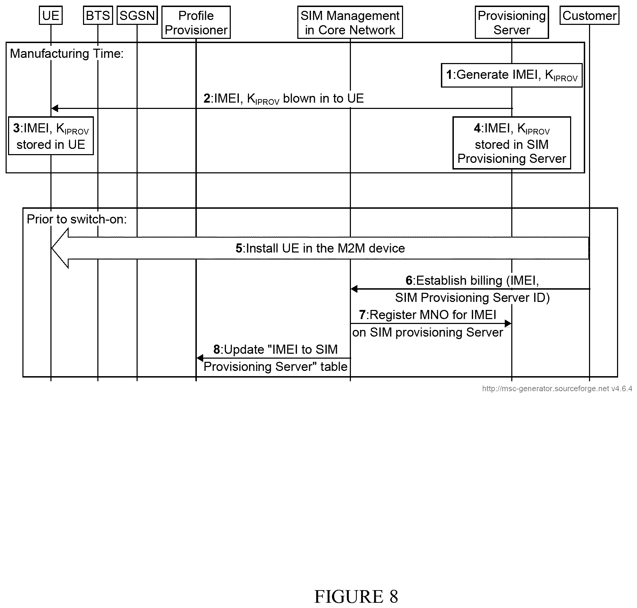

Embodiments of the invention are easily implemented in mobile telephone networks, such as a general packet radio service (GPRS) network as described below for the exemplary embodiments of Figs. 8-12.

Alternate or additional embodiments of the invention may be implemented for other types of devices with network communication capabilities and having memory for storing the K_{IPROV} and provisioning device identifier. Such devices are of interest in the rapidly growing field of the IoT-type networks. Providing an identity profile to a device over a network enables the creation of a network of devices (e.g. IoT) without needing to install a memory card (e.g. a SIM card) in each device, with the potential benefits of simplifying provisioning of the device and eliminating the cost of the memory card.

In networks using the Open Systems Interconnection model (OSI model), the identity profile may be provided to the devices without using any protocol stack above L3. Consequently, binding a device to the network may be independent of any application running on the device. There may be no need to deploy and manage an application to handle additional signaling, as it is built in to conventional OSI modems, nor any need for an IP stack.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer, external processing device or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language and procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer or processing device, special purpose computer or processing device, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

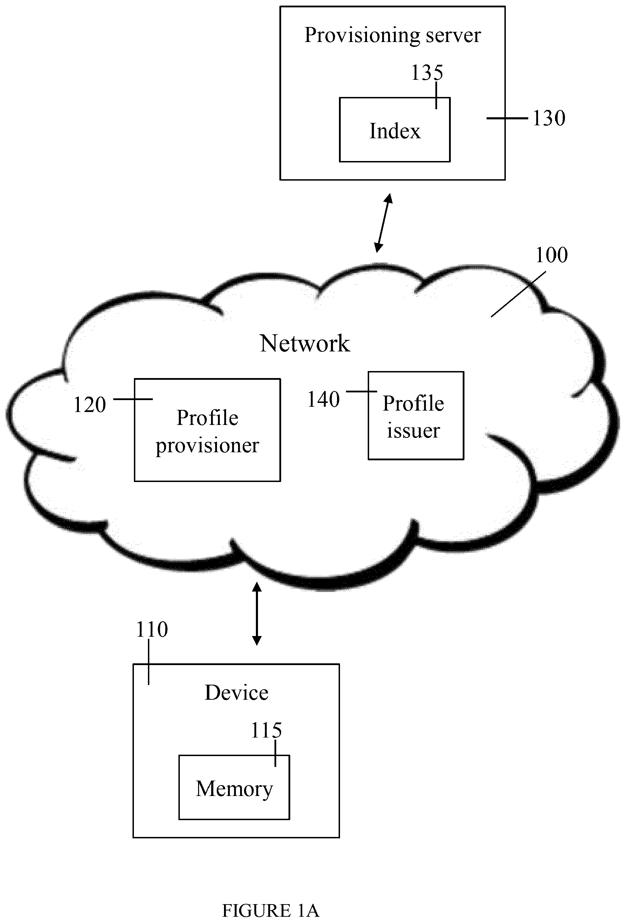

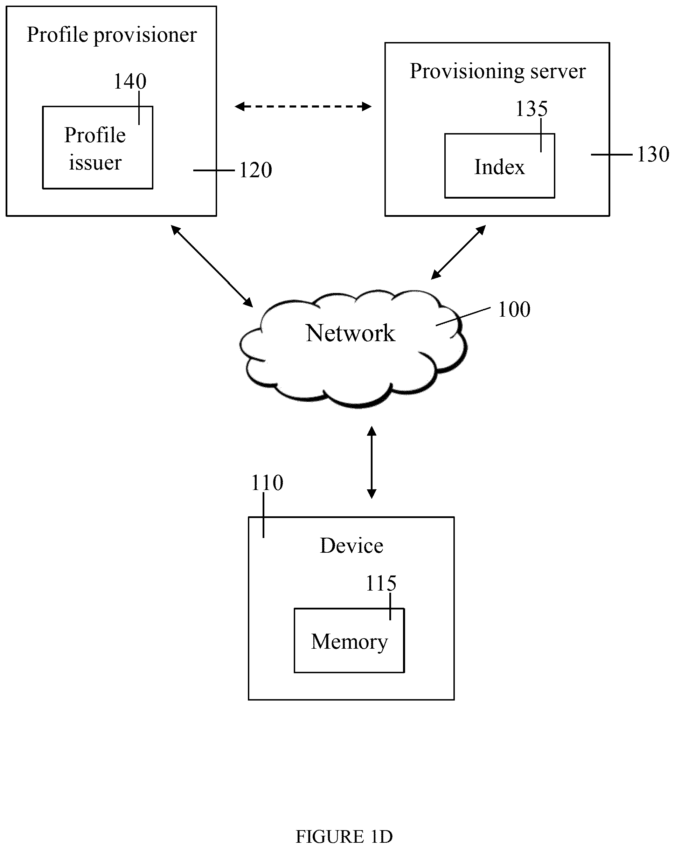

Reference is now made to Figs. 1A-1E which are simplified diagrams of networks supporting identity profile provisioning, according to respective embodiments of the invention.

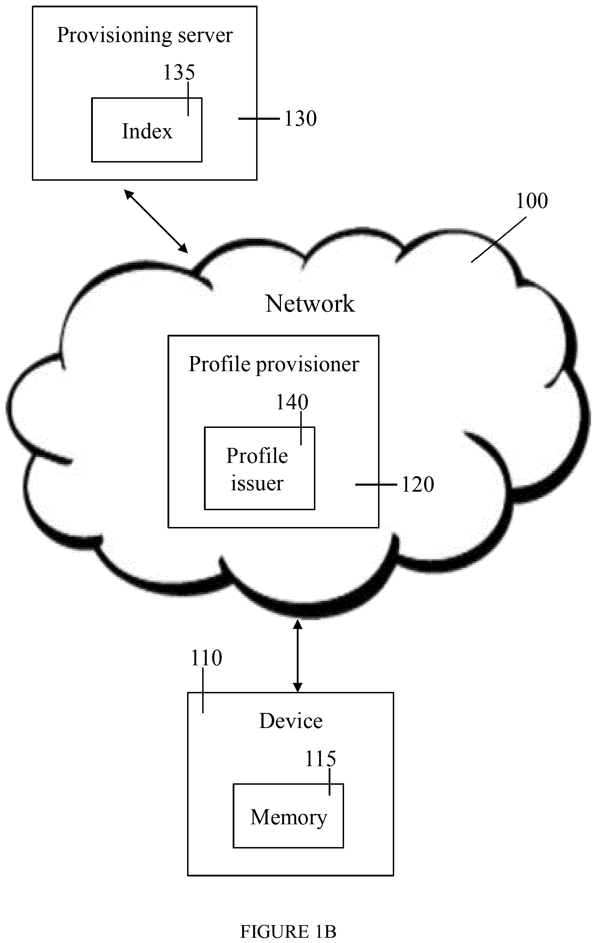

In Figs. 1A and 1B, profile provisioner 120 and profile issuer 140 are network elements within the network, optionally hosted by standard network elements such as a Gateway GPRS support node (GGSN). Communication between profile provisioner 120, profile issuer 140 and other network elements may be internal network communications.

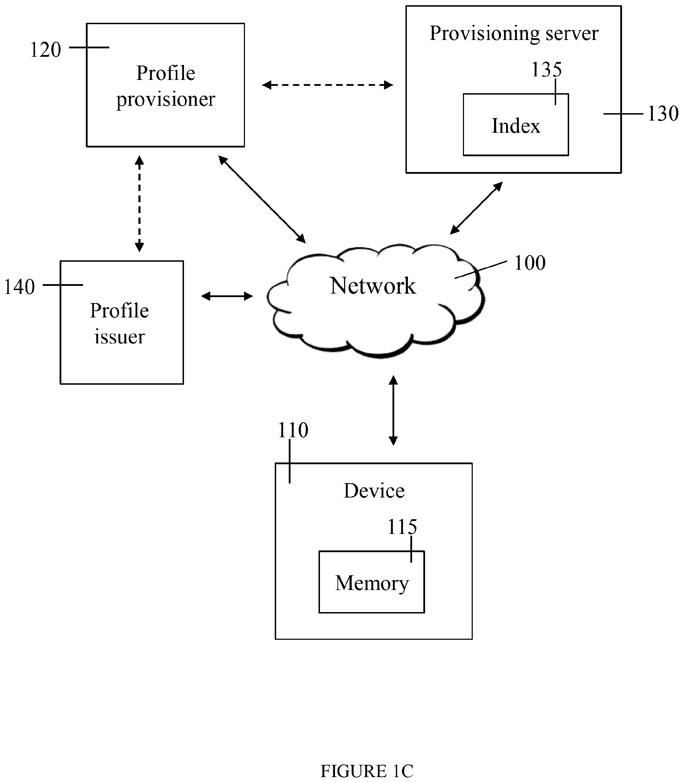

In Figs. 1C and ID, profile provisioner 120 and profile issuer 140 are external to the network, and at least some of the communications (e.g. messages) related to functions implemented by profile provisioner 120 and profile issuer 140 are routed through the network. Optionally, communication between profile provisioner 120 and provisioning server 130 is direct or over a different network (shown as a dashed arrow in Figs. 1C-1D). Alternately or additionally, communication between profile provisioner 120 and profile issuer 140 is direct or over a different network (shown as a dashed arrow in Fig. 1C).

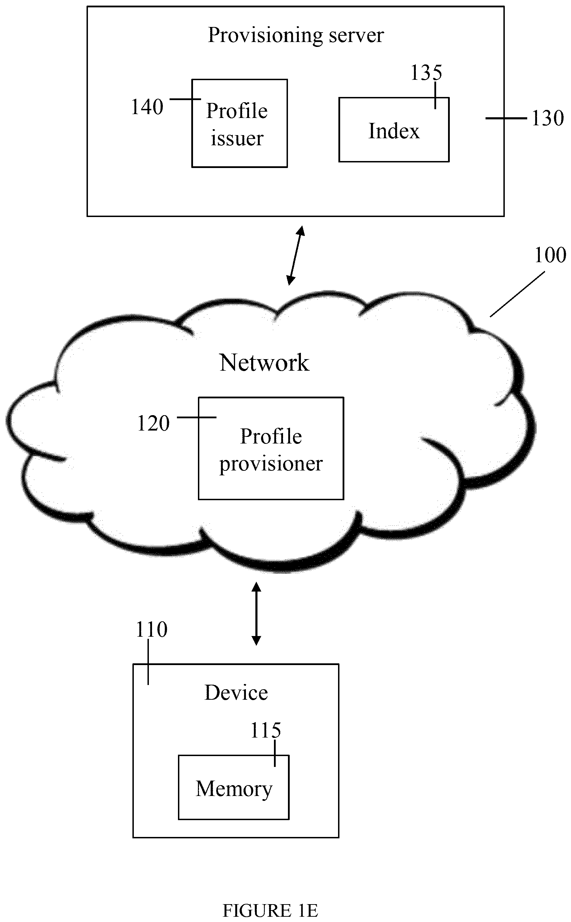

Fig. 1E shows yet another embodiment in which profile provisioner 120 is a network element and provisioning server 130 is external to the network and includes profile issuer 140.

Both device 110 and profile provisioner 120 have capabilities for both non-provisioned communication and provisioned communication.

For simplicity, Figs. 1A-1E show a single device 110. It is to be understood that network 100 connects multiple devices. Optionally, only some of the devices may be provided an identity profile over network 100 as described herein while others are provided with an identity profile using a replaceable memory card (e.g. SIM card).

For simplicity, Figs. 1A-1E show a single profile provisioner 120, provisioning server 130 and profile issuer 140. Other network configurations may include multiple instances of the profile provisioner and/or provisioning server and/or profile issuer. Alternately or additionally, at least one of profile provisioner, provisioning server and profile issuer is distributed over network 100 and/or connected to network 100.

Device 110 is a device which utilizes an identity profile for provisioned communication over network 100. Device 110 has at least one non-volatile memory for storing the device's respective K_{IPROV}, provisioning device identifier and identity profile.

Optionally, device 110 is a stand-alone device such as a mobile telephone. Alternately, device 110 is a module which is to be inserted into another object thereby providing the object with network connectivity (e.g. to be snapped into a socket in the object or embedded at manufacturing time within the object).

Profile provisioner 120 manages the process of providing the identity profile to device 110. When profile provisioner 120 receives a request for an identity profile from device 110 by non-provisioned communication, profile provisioner 120 obtains the respective security key from provisioning server 130 and ensures that secure communications are established between profile issuer 140 and device 110 using the security key.

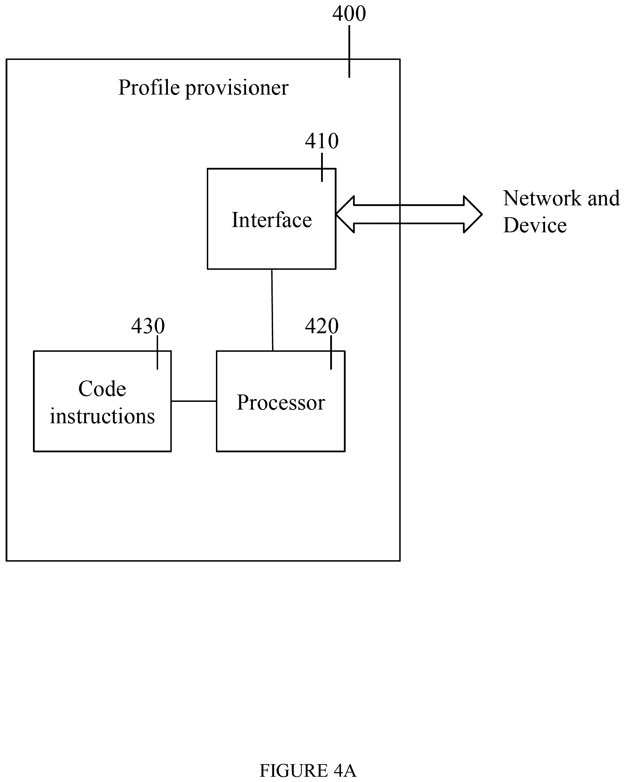

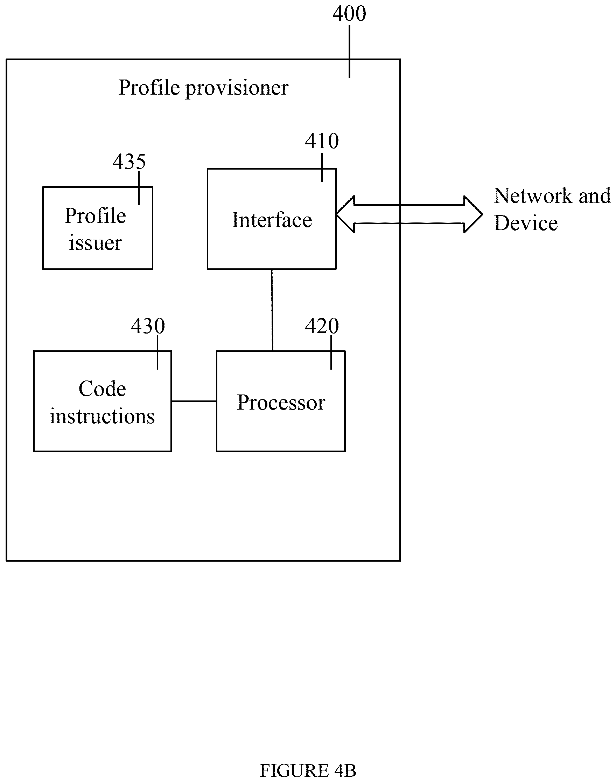

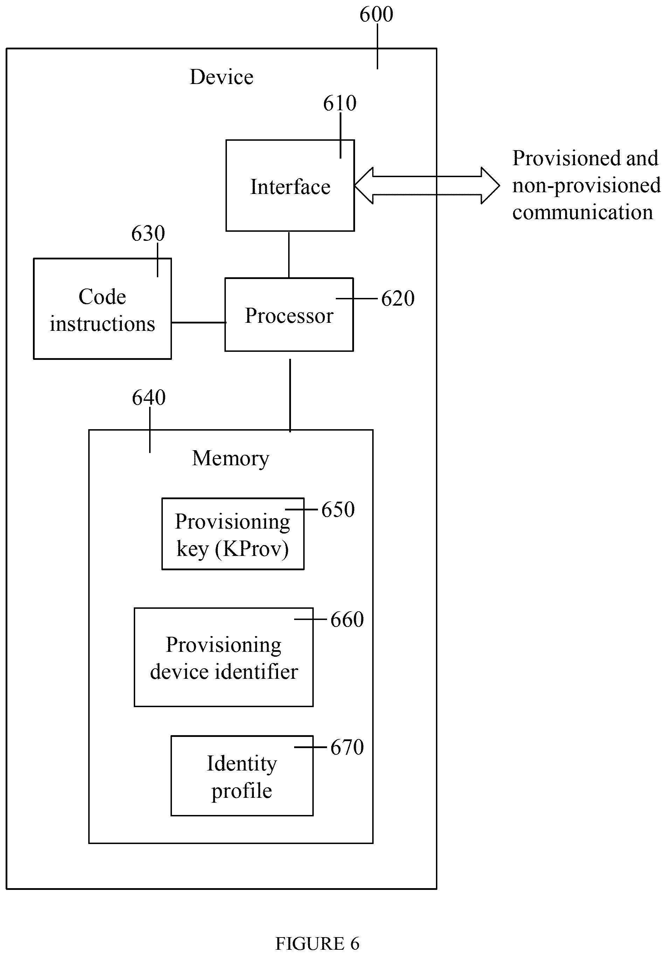

Profile provisioner 120 and device 110 are described in more detail below, with reference to Figs. 4 and 6 respectively.

Provisioning server 130 maintains an index of devices' respective provisioning keys and provisioning device identifiers. Optionally, provisioning server 130 includes additional functionality for appearing on the core network in a manner of an existing network element, such as a GGSN or serving GPRS support node (SGSN), as a peer of other elements on the network.

Profile issuer 140 is the source of the identity profile which is sent to device 110. Optionally, profile issuer 140 generates the identity profile and sends it to device 110. Alternately, profile issuer 140 obtains the identity profile from a different element, internal or external to network 100, for example by querying a network operator server.

Optionally, the identity profile is provided to additional network elements as required for device 110 to perform provisioned communication over network 100 using the identity profile.

Profile issuer 140 may be an independent network element or be part of another network element. Fig. 1A shows an embodiment in which profile issuer 140 is a separate network element. Fig. 1B shows an embodiment in which profile issuer 140 is located in profile provisioner 120. In yet another embodiment (not shown), profile issuer is located in provisioning server 130.

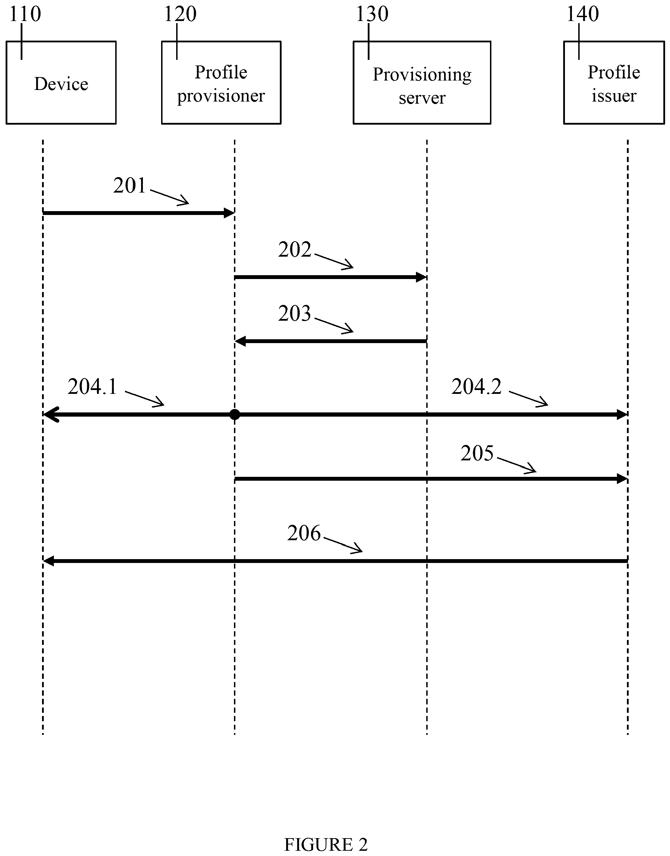

Reference is now made to Fig. 2 which is a simplified signaling chart of messages passing between network elements, according to embodiments of the invention.

Message 201 is sent by device 110 to profile provisioner 120 by non-provisioned communication. The message requests an identity profile for device 110 and includes at least the device's provisioning device identifier.

In message 202, profile provisioner 120 sends the provisioning device identifier to provisioning server 130 requesting a respective security key for the device. In message 203, provisioning server 130 returns the security key to profile provisioner 120.

Optionally, the security key is generated from the provisioning key using a cryptographic process known at least to the device and the provisioning server. Alternately, the provisioning key serves as the security key without any processing by the device and provisioning server.

Messages 204.1 and 204.2 establish a secure connection between profile issuer 140 and device 110.

Message 205 instructs profile issuer 140 to send an identity profile to device 110 over the secure connection.

Once the secure connection is established, profile issuer 140 sends message 206, which contains the identity profile, to device 110. Device 110 may store the identity profile in internal memory and begin provisioned communication.

Fig. 2 illustrates an embodiment in which profile provisioner 120 first establishes a secure connection between profile issuer 140 and device 100. After the secure channel is established, profile issuer 140 instructs profile issuer 140 to send an identity profile to device 110 (message 205).

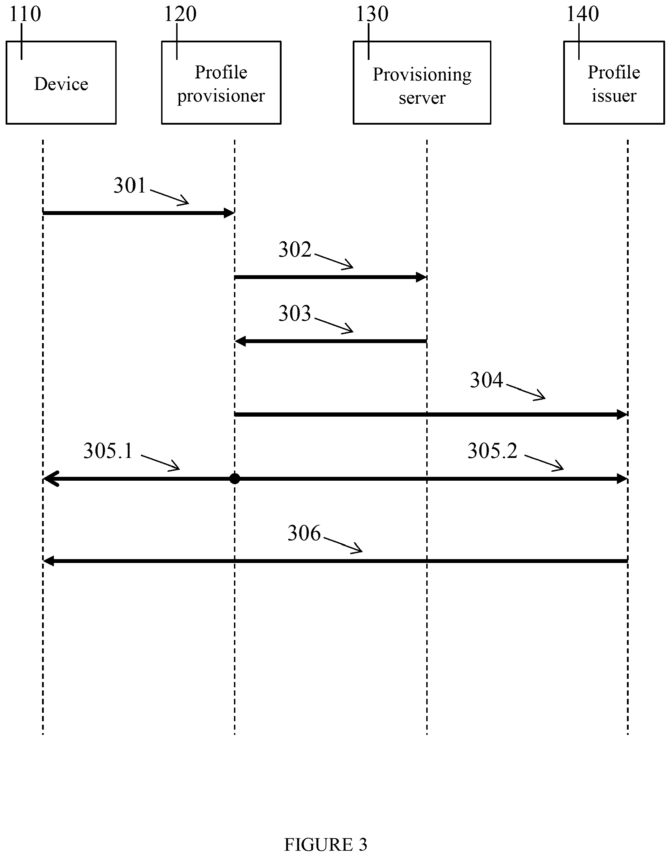

Reference is now made to Fig. 3, which is a simplified signaling chart of messages passing between network elements, according to embodiments of the invention. Fig. 3 illustrates an embodiment in which profile provisioner 120 instructs profile issuer 140 to send an identity profile to the device once a secure connection is established (message 304). Messages 305.1 and 305.2 then establish the secure connection between profile issuer 140 and device 110. Profile issuer 140 sends the identity profile to the device over the secure connection (message 306). Messages 301-303 of Fig. 3 correspond respectively to messages 201-203 of Fig. 2.

### Profile Provisioner

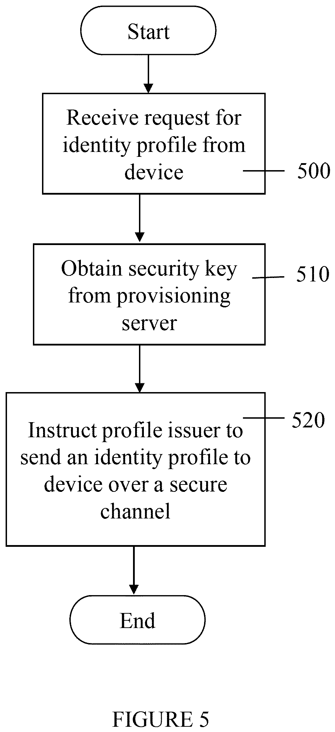

Reference is now made to Figs. 4A and 4B, which are simplified block diagrams of a profile provisioner, according to respective embodiments of the invention. Profile provisioner 120 includes interface 410 and at least one processor 420 for executing code instructions 430 to provide an identity profile to a device as shown in the flowchart of Fig. 5. Fig. 4A illustrates an embodiment in which the profile issuer (not shown) is external profile provisioner 400. Fig. 4B illustrates an embodiment in which profile provisioner 400 includes internal profile issuer 435.

Interface 410 is a network interface which is capable of provisioned and non-provisioned communication with devices. Optionally, interface 410 includes other communication capabilities as required for communicating with other elements, internal and/or external to the network (e.g. provisioning server, profile issuer, network operator servers, routers, etc...).

Optionally interface 410 includes multiple interfaces, which in addition to the provisioned and non-provisioned communication, provide for at least one of:
i) Communication with management function elements within the core network;
ii) Communication with other network elements within the core network; and
iii) Communication with the provisioning server.

Reference is now made to Fig. 5, which is a simplified flowchart of providing an identity profile to a device, according to embodiments of the invention.

In 500, the profile provisioner receives a request for an identity profile from a device by non-provisioned communication. The request includes the device's provisioning device identifier.

In 510, the profile provisioner obtains a security key from a provisioning server. The security key is based on a provisioning key indexed to the provisioning device identifier at the provisioning server, and may be used to establish a secure connection between a profile issuer and the device.

Optionally, obtaining the security key includes:
i) sending a message to the provisioning server requesting a security key for the device associated with the provisioning device identifier; and
ii) receiving the security key from the provisioning server.

Optionally, prior to obtaining the security key, profile provisioner 120 identifies the provisioning server from the provisioning device identifier. This may ensure that in networks with a distributed provisioning server and/or multiple instances of the provisioning server, the message requesting a security key is sent to a provisioning server capable of returning a valid security key.

In 520, the profile provisioner instructs a profile issuer to send the identity profile to the device over a secure connection established using the security key. Optionally, the profile issuer is external to the profile provisioner and the instruction is sent by the profile provisioner to the profile issuer. Alternately, the profile issuer is internal to the profile provisioner and the instruction is an internal command to issue an identity profile.

The secure connection may be established by any technique, protocol or cryptology function known in the art to secure a connection using a security key. Optionally, the secure connection is established using A3 and/or A8 cryptography functions for authentication and key agreement (AKA), based on the security key provided by the provisioning server. Further optionally, the security key is generated from a RAND for A3/A8 cryptography and then encrypted by a protocol already supported by the network and the device, such as one of the GEA3 protocols.

Optionally, the profile provisioner facilitates establishing the secure connection by forwarding messages between the profile issuer and the device. Alternately, the secure connection is established between the profile issuer and the device without the involvement of the profile provisioner.

Optionally, the profile provisioner provides the security key to the profile issuer. The profile issuer may then establish a secure connection with the device directly, without further interaction (e.g. messaging) with the profile provisioner.

Optionally, the profile provisioner identifies a network operator provisioning the device and informs the network operator of the request for an identity profile. This enables the network operator to issue the identity profile to the device (i.e. the network operator maintains the profile issuer). This information may also be of interest to the network operator in order to provide customer services, define network privileges and perform billing and similar functions when a new device is provisioned on the network.

### Device

Reference is now made to Fig. 6, which is a simplified block diagram of a device for communicating over a network, according to embodiments of the invention. Device 600 includes interface 610, at least one processor 620 and at least one non-volatile memory 640.

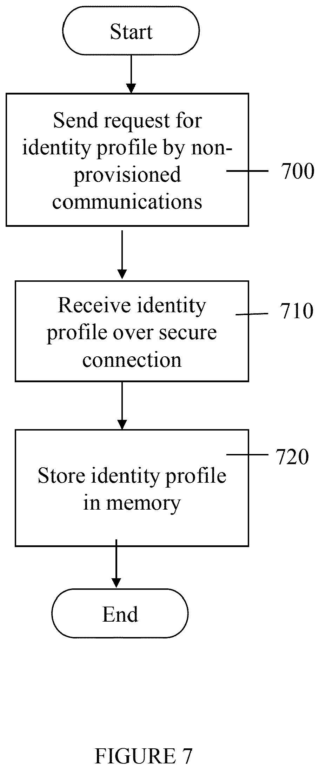

Interface 610 is a network interface which is capable of provisioned and non-provisioned communication over the network. Processor 620 executes code instructions 630 to obtain an identity profile at the device as shown in the flowchart of Fig. 7 (and optionally other device functionality).

Memory 640 stores:
i) the provisioning key (K_{IPROV}) 650;
ii) the provisioning device identifier 660 assigned to the device;
iii) the identity profile 670 for use during provisioned communication; and
iv) optionally, additional data items as required for device functionality.

For simplicity, Fig. 6 shows a single non-volatile memory 640 storing the provisioning key, provisioning device identifier and the identity profile. In some embodiments, memory 640 includes multiple memory elements, each storing at least a portion of the data used by the device. For example, one memory element may store the provisioning key and provisioning device identifier while a second memory stores the identity profile.

During provisioned communication device 600 uses identity profile 670 retrieved from memory 640. Before the device is provisioned, memory 640 may hold no identity profile data or invalid memory profile data, making the device incapable of provisioned communication.

Optionally, memory 640 is integral to the device and may not be removed therefrom. Such an integral memory is unlike a SIM card, which is removable and replaceable in the device.

Reference is now made to Fig. 7, which is a simplified flowchart of obtaining an identity profile at a device, according to embodiments of the invention.

In 700, the device sends a request for an identity profile over a communication connection established by non-provisioned communication. The request includes the provisioning device identifier.

In 710, the device receives the identity profile over a secure connection established using the provisioning key. Optionally, the secure connection is established with a security key generated at the device from the provisioning key. Further optionally, the secure connection is established using A3 and/or A8 cryptography functions for AKA, and encrypted by a protocol already supported by the network and the device, such as one of the GEA3 protocols.

In 720, the device stores the identity profile in the memory.

### Exemplary Identity Profile Provisioning in GPRS Networks

Providing an identity profile to a device as described above may be implemented in a GPRS network as described for the exemplary embodiments below. The user equipment is provided with a K_{IPROV} during manufacture and the International Mobile Station Equipment Identity (IMEI) serves as the provisioning device identifier.

Figs. 8-11B are signaling chart of messages passing between network elements, according to exemplary embodiments of the invention. In the context of these exemplary embodiments the identity profile is denoted the SIM profile.

Network elements which may participate in providing/obtaining the identity profile include:
A) User Equipment (UE) - corresponds to the device to which the profile is provided. Includes:
   i) L1, L2 (e.g. NB C-IoT, NB-IoT, other L1/L2 PHY or MAC system such as LTE), GMM/MM;
   ii) Code instructions for obtaining the SIM data from a network;
   iii) Secure memory for IMSI, Ki and other data; and
   iv) Application code.
B) Base Transceiver Station (BTS) -
   i) Supports the Radio protocol of the UE (e.g. NB IoT but this mechanism is agnostic as to L1 and L2); and
   ii) Supporting Gb or a similar protocol such as S1.
C) Cellular Internet of Things (CIoT) Core -
   i) Typically run by a mobile network operator (MNO);
   ii) Supports Gb or similar (with DRx); and
   iii) Optionally, contains the profile provisioner.
D) Provisioning Server -
   i) Runs independently, not within MNO;
   ii) May validate Device ID and communicate with subscription management functions;
   iii) Generates security key;
   iv) Keyed by the IMEI; and
   v) Optionally includes a profile issuer to generate SIM data (e.g. include a profile issuer) and/or cause the subscription management functions in the core network to generate the SIM data.
E) Subscription management functions within the core network-
   i) Runs within the MNO;
   ii) May populate HLR / HSS / AuC;
   iii) Has access to a profile provisioner;
   iv) Optionally includes a profile issuer to generate SIM data; and
   v) Keyed by IMEI.
F) Profile provisioner -
   i) Maps UEs onto provisioning servers;
   ii) Reinterprets UE traffic for the provisioning server; and
   iii) IP not used for provisioning on the UE.

Figs. 8-11B show phases of messaging performed in order to provide a SIM profile to a UE, according to exemplary embodiments of the invention.

Reference is now made to Fig. 8, which is a simplified signaling chart of messaging during manufacture and prior to switch on of the device. During manufacture (1-4) the IMEI and K_{IPROV} are generated, stored in the UE and in the provisioning server.

Prior to switch on, the UE is installed in a machine to machine (M2M) device (5), billing is established with the MNO (6), the MNO associated with the device's IMEI is registered on the provisioning server (7) and the profile provisioner is informed of the provisioning server associated with the IMEI (8).

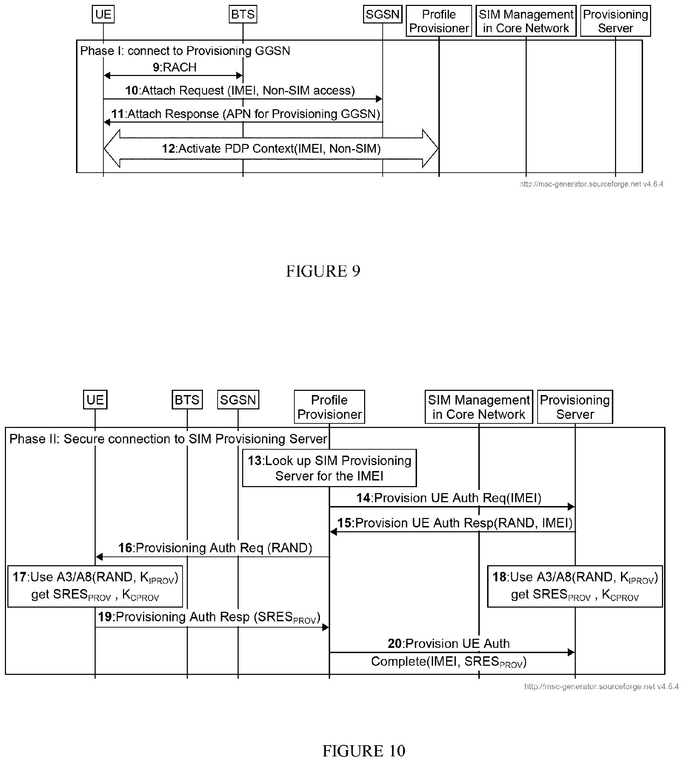

Reference is now made to Fig. 9, which is a simplified signaling chart of messaging during connection of the UE to the profile provisioner. Non-provisioned communication (denoted non-SIM access) is performed with the SGSN (9-11), which provides the APN by non-SIM access, to activate PDP context between the device and the profile provisioner (12).

Reference is now made to Fig. 10, which is a simplified signaling chart of messaging during establishment of the secure connection between the UE and the provisioning server. Profile provisioner identifies the provisioning server for the IMEI (13) and obtains the RAND security key for the device from the provisioning server (14, 15). In 16-20, A3/A8 authentication and authorization is performed using the RAND, creating a secure connection between the UE and the SIM provisioner server.

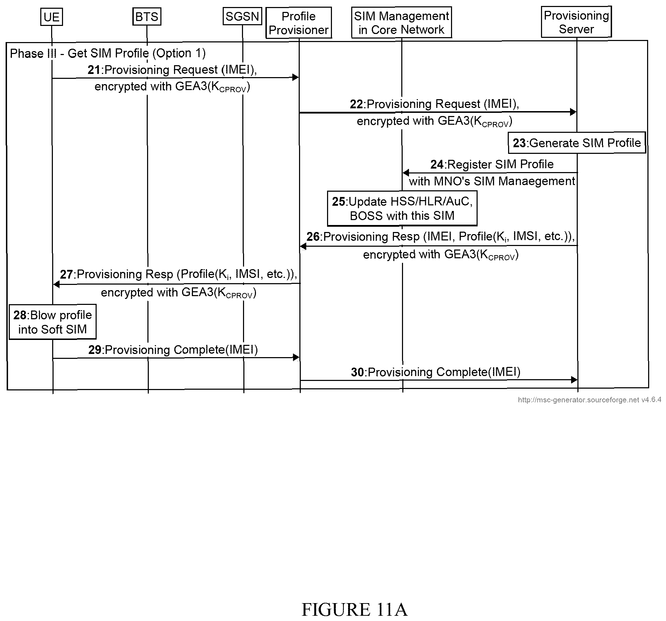

Reference is now made to Fig. 11A, which is a simplified signaling chart of messaging to get the SIM profile to the UE according to a first exemplary embodiment. In this embodiment the SIM profile is generated (i.e. issued) by the provisioning server.

In 21-22 a provisioning request from the UE is forwarded by the profile provisioner to the provisioning server, which generates the SIM profile (23). The SIM profile is registered with the subscription management functions in the core network (24) and provided to the UE (26, 27) which stores it in memory (28). Provisioning is completed (29, 30).

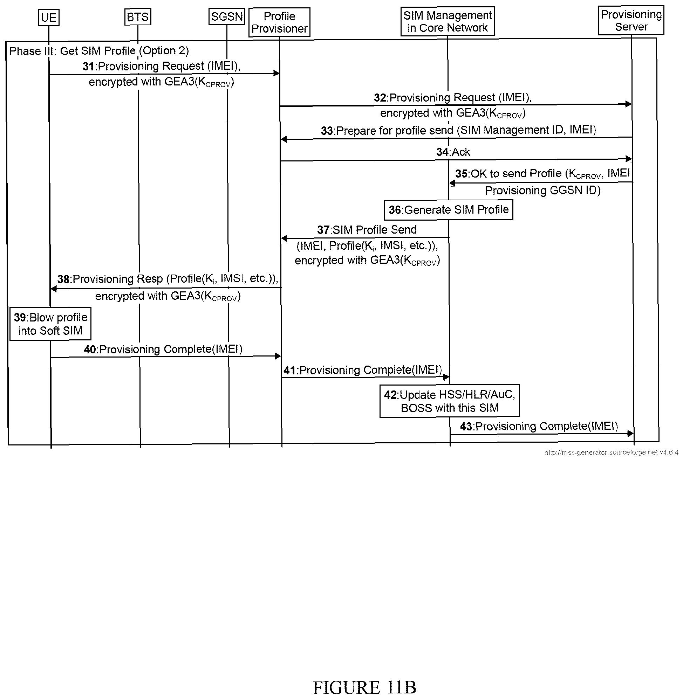

Reference is now made to Fig. 11B, which is a simplified signaling chart of messaging to get the SIM profile to the UE according to a second exemplary embodiment. In this embodiment the SIM profile is generated (i.e. issued) by the subscription management functions in the core network.

In 31-32 a provisioning request from the UE is forwarded by the profile provisioner to the provisioning server. The SIM profile is generated by the subscription management functions in the core network (36) and provided to the UE (37, 38) which stores it in memory (39). Provisioning is completed (40-43).

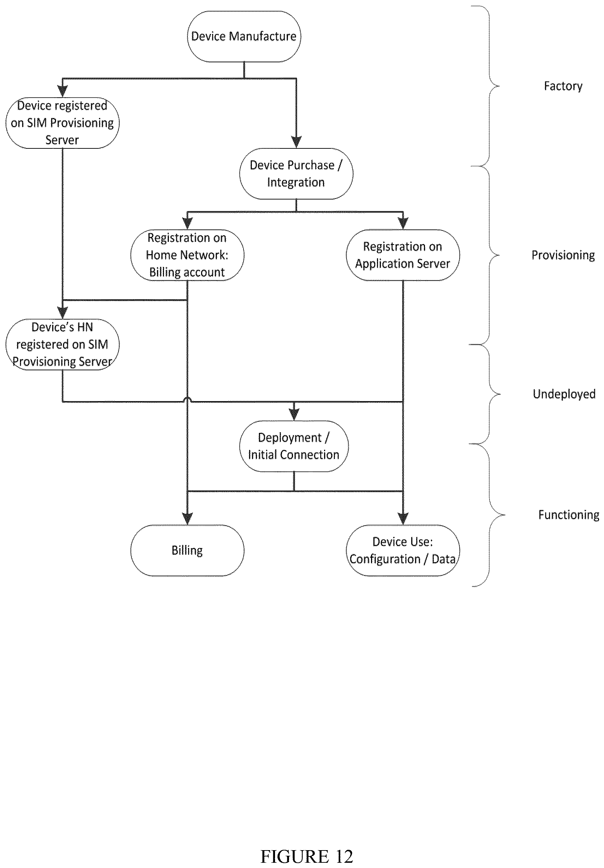

Reference is now made to Fig. 12 which is a simplified flowchart of providing a device with an identity profile, according to exemplary embodiments of the invention. Fig. 12 presents an overall flow (similar to the signaling charts of Figs. 8-11B) from device manufacture to device operation, including device purchase and arranging billing with a home network (HN). In the factory, the device is manufactured, registered on the provisioning server (and a K_{IPROV} and IMEI are stored in the device, not shown). Arrangements are made with the HN, optionally including establishing billing arrangements, and the device is registered on the application server. Additionally, the HN is registered with the provisioning server. During deployment, the identity profile is provided to the device over the network as described herein. After deployment, the device has an identity profile and may be used as a provisioned device in the network (along with user billing and other interactions with the HN).

Providing an identity profile to a device over a network, as described herein, may be easily integrated into mobile and other networks, particularly in those with existing support for non-provisioned communication. There is no need for a separate provisioning network and the cost of the SIM card is removed, reducing the cost of devices for IoT-type networks.

The methods as described above are used in the fabrication of integrated circuit chips.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant types of networks, network communication, network elements, user equipment, devices, identity profiles, identity profile data, secure connections, protocols, cryptography functions and authentication and authorization procedures will be developed and the scope of the terms network, network communication, network element, user equipment, device, identity profile, identity profile data, secure connection, protocol, cryptography function and authentication and authorization is intended to include all such new technologies a priori.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within broad scope of the appended claims.

Citation or identification of any reference in this application shall not be construed as an admission that such reference is available as prior art to the present invention. To the extent that section headings are used, they should not be construed as necessarily limiting.

## Claims

1. An apparatus for providing an identity profile to a device, wherein said device (110) is provisionable for communicating over a network using said identity profile, said apparatus (120) comprising:
an interface (410) adapted for provisioned and non-provisioned communications with devices connected to said network (100), said devices having respective provisioning keys and provisioning device identifiers; and
comprising at least one processor (420) and code instructions (430) which when executed on the least one processor (420), cause the at least one processor (420) to implement the steps of:
receiving, from a device (110) by non-provisioned communications, a request for an identity profile, wherein said request comprises a respective IMEI of said device (110);
obtaining, from a provisioning server (130), a security key for establishing a secure connection between said device (110) and a profile issuer (140), wherein said security key is based on a provisioning key indexed to said respective IMEI;
establishing a secure connection between said device (110) and a profile issuer (140) using A3 and/or A8 cryptography functions for authentication and key agreement, based on the security key provided by the provisioning server (130); and
instructing said profile issuer (140) to send said identity profile to said device (110) over said secure connection established using said security key.

2. An apparatus according to claim 1, further adapted to provide said security key to said profile issuer (140).

3. An apparatus according to claim 1 or claim 2, further adapted to forward authentication and authorization messages between said profile issuer (140) and said device (110).

4. An apparatus according to any one of claims 1-3, wherein said apparatus (400) is further adapted to identify a network operator provisioning said device (110) and to inform said network operator of said request for an identity profile.

5. An apparatus according to claim 1, wherein said security key is generated from a RAND for A3/A8 cryptography.

6. An apparatus according to any one of claims 1-5, further adapted to identify said provisioning server (130) from said respective provisioning device identifier.

7. A method of providing an identity profile to a device, wherein said device (110) is provisionable for communicating over a network (100) using said identity profile, said method comprising:
receiving, from a device (110) by non-provisioned communications, a request for an identity profile, wherein said request comprises a respective IMEI of said device (110);
obtaining, from a provisioning server (130), a security key for establishing a secure connection between said device (110) and a profile issuer (140), wherein said security key is based on a provisioning key indexed to said respective IMEI;
establishing a secure connection between said device (110) and a profile issuer (140) using A3 and/or A8 cryptography functions for authentication and key agreement, based on the security key provided by the provisioning server (130); and
instructing said profile issuer (140) to send said identity profile to said device (110) over said secure connection established using said security key.

8. A method according to claim 7, wherein said provisioning key is a cryptographic key pre-shared between said device (110) and said provisioning server (130).

## Patentansprüche

1. Einrichtung zum Bereitstellen eines Identitätsprofils für eine Vorrichtung, wobei die Vorrichtung (110) zum Kommunizieren unter Verwendung des Identitätsprofils über ein Netzwerk bereitstellbar ist, wobei die Einrichtung (120) Folgendes umfasst:
eine Schnittstelle (410), die für eine bereitgestellte und eine nicht bereitgestellte Kommunikation mit Vorrichtungen, die mit dem Netzwerk (100) verbunden sind, angepasst ist, wobei die Vorrichtungen jeweilige Bereitstellungsschlüssel und Vorrichtungsbereitstellungskennungen aufweisen; und
umfassend mindestens einen Prozessor (420) und Codeanweisungen (430), die, wenn sie auf dem mindestens einen Prozessor (420) ausgeführt werden, den mindestens einen Prozessor (420) veranlassen, die folgenden Schritte zu implementieren:
Empfangen einer Anforderung eines Identitätsprofils von einer Vorrichtung (110) mittels nicht bereitgestellter Kommunikation, wobei die Anforderung eine jeweilige IMEI der Vorrichtung (110) umfasst;
Erhalten eines Sicherheitsschlüssels von einem Bereitstellungsserver (130) zum Aufbauen einer sicheren Verbindung zwischen der Vorrichtung (110) und einem Profilaussteller (140), wobei der Sicherheitsschlüssel auf einem Bereitstellungsschlüssel, der auf die jeweilige IMEI indiziert ist, basiert;
Aufbauen einer sicheren Verbindung zwischen der Vorrichtung (110) und einem Profilaussteller (140) unter Verwendung von A3- und/oder A8-Kryptographiefunktionen zur Authentifizierung und Schlüsselvereinbarung auf Basis des Sicherheitsschlüssels, der vom Bereitstellungsserver (130) bereitgestellt wird; und
Anweisen des Profilausstellers (140), das Identitätsprofil über die sichere Verbindung, die unter Verwendung des Sicherheitsschlüssels aufgebaut wurde, an die Vorrichtung (110) zu senden.

2. Einrichtung nach Anspruch 1, die ferner angepasst ist, den Sicherheitsschlüssel dem Profilaussteller (140) bereitzustellen.

3. Einrichtung nach Anspruch 1 oder Anspruch 2, die ferner angepasst ist, Authentifizierungs- und Autorisierungsnachrichten zwischen dem Profilaussteller (140) und der Vorrichtung (110) weiterzuleiten.

4. Einrichtung nach einem der Ansprüche 1-3, wobei die Einrichtung (400) ferner angepasst ist, einen Netzwerkbetreiber, der die Vorrichtung (110) bereitstellt, zu identifizieren und den Netzwerkbetreiber über die Anforderung eines Identitätsprofils zu informieren.

5. Einrichtung nach Anspruch 1, wobei der Sicherheitsschlüssel aus einer "RAND" für die A3-/A8-Kryptographie erzeugt wird.

6. Einrichtung nach einem der Ansprüche 1-5, die ferner angepasst ist, den Bereitstellungsserver (130) anhand der jeweiligen Vorrichtungsbereitstellungskennung zu identifizieren.

7. Verfahren zum Bereitstellen eines Identitätsprofils für eine Vorrichtung, wobei die Vorrichtung (110) zum Kommunizieren unter Verwendung des Identitätsprofils über ein Netzwerk (100) bereitstellbar ist, wobei das Verfahren Folgendes umfasst:
Empfangen einer Anforderung eines Identitätsprofils von einer Vorrichtung (110) mittels nicht bereitgestellter Kommunikation, wobei die Anforderung eine jeweilige IMEI der Vorrichtung (110) umfasst;
Erhalten eines Sicherheitsschlüssels von einem Bereitstellungsserver (130) zum Aufbauen einer sicheren Verbindung zwischen der Vorrichtung (110) und einem Profilaussteller (140), wobei der Sicherheitsschlüssel auf einem Bereitstellungsschlüssel, der auf die jeweilige IMEI indiziert ist, basiert;
Aufbauen einer sicheren Verbindung zwischen der Vorrichtung (110) und einem Profilaussteller (140) unter Verwendung von A3- und/oder A8-Kryptographiefunktionen zur Authentifizierung und Schlüsselvereinbarung auf Basis des Sicherheitsschlüssels, der vom Bereitstellungsserver (130) bereitgestellt wird; und
Anweisen des Profilausstellers (140), das Identitätsprofil über die sichere Verbindung, die unter Verwendung des Sicherheitsschlüssels aufgebaut wurde, an die Vorrichtung (110) zu senden.

8. Verfahren nach Anspruch 7, wobei der Bereitstellungsschlüssel ein kryptographischer Schlüssel ist, der zwischen der Vorrichtung (110) und dem Bereitstellungsserver (130) vorab vereinbart wird.

## Revendications

1. Appareil pour fournir un profil d'identité à un dispositif, ledit dispositif (110) pouvant être fourni pour communiquer sur un réseau à l'aide dudit profil d'identité, ledit appareil (120) comprenant :
une interface (410) adaptée pour des communications fournies et non fournies avec des dispositifs connectés audit réseau (100), lesdits dispositifs ayant des clés de fourniture et des identificateurs de dispositif de fourniture respectifs ; et
comprenant au moins un processeur (420) et des instructions de code (430) qui, lorsqu'elles sont exécutées sur l'au moins un processeur (420), amènent l'au moins un processeur (420) à exécuter les étapes de :
réception, à partir d'un dispositif (110) par des communications non fournies, d'une demande de profil d'identité, ladite demande comprenant un IMEI respectif dudit dispositif (110) ;
obtention, à partir d'un serveur de fourniture (130), d'une clé de sécurité pour établir une connexion sécurisée entre ledit dispositif (110) et un émetteur de profil (140), ladite clé de sécurité étant basée sur une clé de fourniture indexée sur ledit IMEI respectif ;
établissement d'une connexion sécurisée entre ledit dispositif (110) et un émetteur de profil (140) à l'aide de fonctions de cryptographie A3 et/ou A8 pour l'authentification et l'accord de clé, sur la base de la clé de sécurité fournie par le serveur de fourniture (130) ; et
instruction audit émetteur de profil (140) d'envoyer ledit profil d'identité audit dispositif (110) par ladite connexion sécurisée établie à l'aide de ladite clé de sécurité.

2. Appareil selon la revendication 1, adapté en outre pour fournir ladite clé de sécurité audit émetteur de profil (140).

3. Appareil selon la revendication 1 ou la revendication 2, adapté en outre pour transmettre des messages d'authentification et d'autorisation entre ledit émetteur de profil (140) et ledit dispositif (110).

4. Appareil selon l'une quelconque des revendications 1 à 3, ledit appareil (400) étant en outre adapté pour identifier un opérateur de réseau fournissant ledit dispositif (110) et pour informer ledit opérateur de réseau de ladite demande de profil d'identité.

5. Appareil selon la revendication 1, ladite clé de sécurité étant générée à partir d'une RAND pour la cryptographie A3/A8.

6. Appareil selon l'une quelconque des revendications 1 à 5, adapté en outre pour identifier ledit serveur de fourniture (130) à partir dudit identificateur de dispositif de fourniture respectif.

7. Procédé de fourniture d'un profil d'identité à un dispositif, ledit dispositif (110) pouvant être fourni pour communiquer sur un réseau (100) à l'aide dudit profil d'identité, ledit procédé comprenant :
la réception, à partir d'un dispositif (110) par des communications non fournies, d'une demande de profil d'identité, ladite demande comprenant un IMEI respectif dudit dispositif (110) ;
l'obtention, à partir d'un serveur de fourniture (130), d'une clé de sécurité pour établir une connexion sécurisée entre ledit dispositif (110) et un émetteur de profil (140), ladite clé de sécurité étant basée sur une clé de fourniture indexée sur ledit IMEI respectif ;
l'établissement d'une connexion sécurisée entre ledit dispositif (110) et un émetteur de profil (140) à l'aide de fonctions de cryptographie A3 et/ou A8 pour l'authentification et l'accord de clé, sur la base de la clé de sécurité fournie par le serveur de fourniture (130) ; et
l'instruction audit émetteur de profil (140) d'envoyer ledit profil d'identité audit dispositif (110) par ladite connexion sécurisée établie à l'aide de ladite clé de sécurité.

8. Procédé selon la revendication 7, ladite clé de fourniture étant une clé cryptographique pré-partagée entre ledit dispositif (110) et ledit serveur de fourniture (130).
